(19) Europäisches Patentamt
European Patent Office
Office européen des brevets

(11) Veröffentlichungsnummer: **0 083 933**
**A1**

(12) # EUROPÄISCHE PATENTANMELDUNG

(21) Anmeldenummer: 83100078.1

(22) Anmeldetag: 07.01.83

(51) Int. Cl.³: C 09 K 5/04

(30) Priorität: 13.01.82 DE 3200736

(43) Veröffentlichungstag der Anmeldung: 20.07.83 Patentblatt 83/29

(84) Benannte Vertragsstaaten: DE FR IT NL SE

(71) Anmelder: HOECHST AKTIENGESELLSCHAFT
Postfach 80 03 20
D-6230 Frankfurt/Main 80(DE)

(72) Erfinder: Zeininger, Hannelore, Dr.
Hundshager Weg 11
D-6238 Hofheim am Taunus(DE)

(54) **Arbeitsmedium für Sorptions-Wärmepumpen.**

(57) In Sorptions-Wärmepumpen lassen sich Arbeitsmedien einsetzen, die aus einem Wasserstoff enthaltenden Fluor- oder Fluorchlorkohlenwasserstoff und einer flüssigen Verbindung der Formel

$$R-CO-N(R^2)-R^1$$

bestehen, in der
$R^2$ für einen $C_1$- bis $C_4$-Alkylrest,
$R^1$ für $C_1$- bis $C_{10}$-Alkyl- oder Acetylrest und
R für ein Wasserstoffatom oder einen $C_1$-$C_{10}$-Alkylrest steht,
oder in der
R und $R^2$ zusammen eine Alkylen- oder Alkenylengruppe mit zusammen 3 bis 5 Kohlenstoff-Brückengliedern, die noch durch Methylgruppen substituiert sein kann, bedeuten, mit der Maßgabe, daß R, $R^1$ und $R^2$ zusammen zwischen 4 und 15 Kohlenstoffatomen enthalten.

p(bar)
19bar
5bar
Q
V
P
0
50
130 T(°C)

BAD ORIGINAL

Arbeitsmedium für Sorptions-Wärmepumpen

Die vorliegende Erfindung bezieht sich auf ein Arbeitsmedium das einen Wasserstoff enthaltenden Fluor- oder Fluorchlorkohlenwasserstoff enthält und in Wärmepumpen vom Absorptionstyp zur Erzeugung von Kälte oder Wärme eingesetzt werden kann.

Die Verwendung von Wärmepumpen für Kühl- oder Heizzwecke ist seit langem bekannt. Während anfangs elektrisch angetriebene Kompressionsmaschinen zur Erzeugung von Kälte im Vordergrund standen, gewinnen in letzter Zeit Heizwärmepumpen an Interesse, die in der Lage sind, Energie einzusparen. Dabei können im Prinzip sowohl Kompressionsals auch Sorptions-Wärmepumpen eingesetzt werden. Sorptions-Wärmepumpen haben aber gegenüber elektrisch angetriebenen Kompressions-Wärmepumpen einige Vorteile, im wesentlichen die Geräuscharmut, geringerer Verschleiß, da kaum mechanisch angetriebene Teile vorhanden sind, geringerer Wartungsbedarf, geringere Anlagenkosten, vor allem aber ein geringerer Primär-Engergieverbrauch. Bei einer elektrisch betriebenen Kompressions-Wärmepumpe ist z. B. zu berücksichtigen, daß bis zur Stromerzeugung etwa 2/3 der Primärenergie verloren gegangen sind.

Stoffpaare für Sorptions-Wärmepumpen, bestehend aus einem Lösungsmittel und einem flüchtigen zu lösenden Stoff, sind bereits bekannt. Solche Stoffpaare wurden zunächst für den Einsatz in großtechnischen Kältemaschinen entwickelt (Wasser/Ammoniak; Lithiumbromid + Wasser/Wasser). Für private Haushalte ist allerdings der Einsatz von Ammoniak aus toxikologischen und sicherheitstechnischen Gründen eingeschränkt. Kombinationen mit Lithiumbromid erfordern einen hohen Aufwand bezüglich Dichtheit, da die Anlagen in hohem Vakuum arbeiten.

Für den Einsatz in kleineren Systemen, insbesondere in privaten Haushalten, wurden Systeme vorgeschlagen, die einen Fluorchlorkohlenwasserstoff als flüchtige Phase enthalten, da diese Stoffgruppe unbrennbar und vergleichsweise nicht toxisch und nicht korrosiv ist.
Arbeitsstoffpaare für Sorptions-Wärmepumpen, in denen das Lösungsmittel ein Phosphorsäureamid mit Alkyl- oder Phenylgruppen ist und die flüchtige Phase ein Fluorchloralkan darstellt, sind Gegenstand der DE-OS 29 44 189.
Als derzeitig günstigstes System eines Fluorchlorkohlenwasserstoffes mit einem Lösemittel wird in der Fachliteratur die Kombination von FKW 22 (Monochlordifluormethan) mit Tetraethylenglykol-dimethylether angesehen. (B. Eisemann, Absorption refrigeration, ASHRAE Journal, Dec. 1959, p. 45 - 50. S. Mastrangelo, Chlorofluorohydrocarbons in tetraethylene glycoldimethyl ether, ASHRAE Journal, Oct. 1959, p. 64 - 67. K. Stephan, D. Seher, Arbeitsgemische für Sorptions-Wärmepumpen, Klima-Kälte-Heizung 1/1980 Seite 874, 875)

Ein Stoffpaar (bestehend aus Arbeitsstoff und Lösemittel) ist zum Einsatz für die Sorptionswärmepumpe geeignet, wenn vor allem die Entgasungsbreite des Arbeitsstoffes groß ist. Es kann dann eine hohe Wärmemenge pro Gewichtseinheit des Lösemittels transportiert werden. Unter Entgasungsbreite wird die Differenz zwischen der Löslichkeit des Arbeitsstoffes im Absorber und derjenigen im Austreiber (= Generator) in kg/kg Lösemittel verstanden. Der reziproke Wert dieser Messgröße gibt die pro kg Arbeitsstoff umzupumpende Lösungsmittelmenge an. Für das bekannte System FKW 22-Tetraethylenglykoldimethylether beträgt bei 5 bar und 50°C Lösetemperatur im Absorber und bei 10 bar und 130°C im Austreiber die Entgasungsbreite 0,19 kg/kg Lösemittel. Dies bedeutet, daß 5,3 kg Lösemittel pro kg FKW 22 umzupumpen sind. Für das gleiche System beträgt die Sorptionsenthalpie des FKW 22 bei 50°C -310 kJ/kg FKW 22. In dieser Größe ist die Verdampfungsenthalpie des FKW in Höhe von 154 kJ/kg enthalten.

 0083933

Vorteilhaft sind ferner eine möglichst geringe spezifische Wärme und Viskosität des Lösemittels. Für Tetraethylenglykol-dimethylether wurden bei 50°C Werte von 2,16 kJ/kg K und 2,04 $mm^2/s$ bestimmt.

Der Erfindung liegt die Aufgabe zugrunde, ein Arbeitsstoffpaar zu schaffen, das pro Gewichtseinheit des Lösemittels eine erheblich höhere Wärmemenge transportiert, aber die übrigen Anforderungen an ein solches System ebenfalls erfüllt. Es soll also z.B. nicht korrosiv sein. Es soll mit ihm möglich sein, der Umgebung bei -20°C Wärme zu entziehen. Der Arbeitsstoff soll aus dem Lösungsmittel bei Temperaturen von 150°C bis 250°C ausgetrieben werden können.

Es wurde nun ein Arbeitsmedium gefunden, das diese Aufgabe löst und das neben einem Wasserstoff enthaltenden Fluor- oder Fluorchlorkohlenwasserstoff noch ein weiteres Lösungsmittel enthält. Dieses Lösungsmittel besteht aus mindestens einem flüssigen Säureamid der nachstehenden Formel (I)

$$R{-}CO{-}N(R^2){-}R^1$$

in der $R^2$ für $C_1$ bis $C_4$-Alkyl,
$R^1$ für $C_1$ bis $C_{10}$-Alkyl oder Acetyl und
R für $C_1$ bis $C_{10}$-Alkyl oder Wasserstoff steht
oder in der
R und $R^2$ zusammen eine Alkylen- oder Alkenylengruppe mit 3 bis 5 Kohlenstoff-Brückengliedern, die noch durch Methylgruppen substituiert sein kann, bedeuten,
mit der Maßgabe, daß R, $R^1$ und $R^2$ zusammen zwischen 4 und 15 Kohlenstoffatomen enthalten.

Die Alkylreste R, $R^1$ und $R^2$ können linear oder verzweigt sein oder Cykloalkylreste, wie z. B. den Cyklohexylrest, darstellen. Bevorzugt sind Alkylreste $C_1$ - $C_6$, insbesondere $C_1$ - $C_4$. Beispiele für Alkylengruppen mit 3 bis 5 Kohlenstoff-Brückengliedern sind die Gruppen-$(CH_2)_3$-, -$(CH_2)_4$, -$(CH_2)_5$-, -$(CH_2)_2$ $CH_3$-CH-, -$(CH_2)_2$ -$CHCH_3$-$CH_2$-, -$(CH_2)_3$-CHX mit X = $CH_3$ oder $C_2H_5$. Flüssige Säureamide mit einem Siedepunkt über 160°C, insbesondere

über 180°C sind bevorzugt. Unter den nicht -cyklischen Säureamiden sind Verbindungen bevorzugt, in denen $R^1$ und $R^2$ identisch sind. Eine Reihe erfindungsgemäß einsetzbarer Säureamide ist beispielhaft in den Tabellen 1 und 2 aufgeführt.

Beispiele für geeignete wasserstoffenthaltende Fluorverbindungen sind die Verbindungen $CH_2F_2$, $CF_3CH_3$, $C_2HClF_4$, und insbesondere $CF_2ClH$ (FKW 22)sowie $C_3F_7H$ (FKW 227). Die Fluorverbindung soll einen Siedepunkt unter 0°C aufweisen. Bevorzugt sind Fluorchlorverbindungen mit 1 bis 3 Kohlenstoff-Atome

Die Entgasungsbreite der neuen Systeme ist merklich größer, als beim System FKW 22/Tetraethylenglykol-dimethyläther. Daher ist auch die Wärmemenge, die pro kg Lösemittel transportiert werden kann, bei den erfindungsgemäßen Arbeitsmedien merklich größer. Die mit den erfindungsgemäßen Stoffpaaren gefüllten Sorptions-Wärmepumpen können sowohl als Kältemaschine oder als Heizwärmepumpe betrieben werden. Die Anwendung in einer Heizwärmepumpe ergibt energetische Vorteile gegenüber der Anwendung in Kompressions-Wärmepumpen. Bei Betrieb als Kältemaschine kommen die Vorteile im Vergleich zu einer Kompressions-Kälteanlage (günstigerer Energiebedarf) hauptsächlich bei größeren Anlagen zum Vorschein.

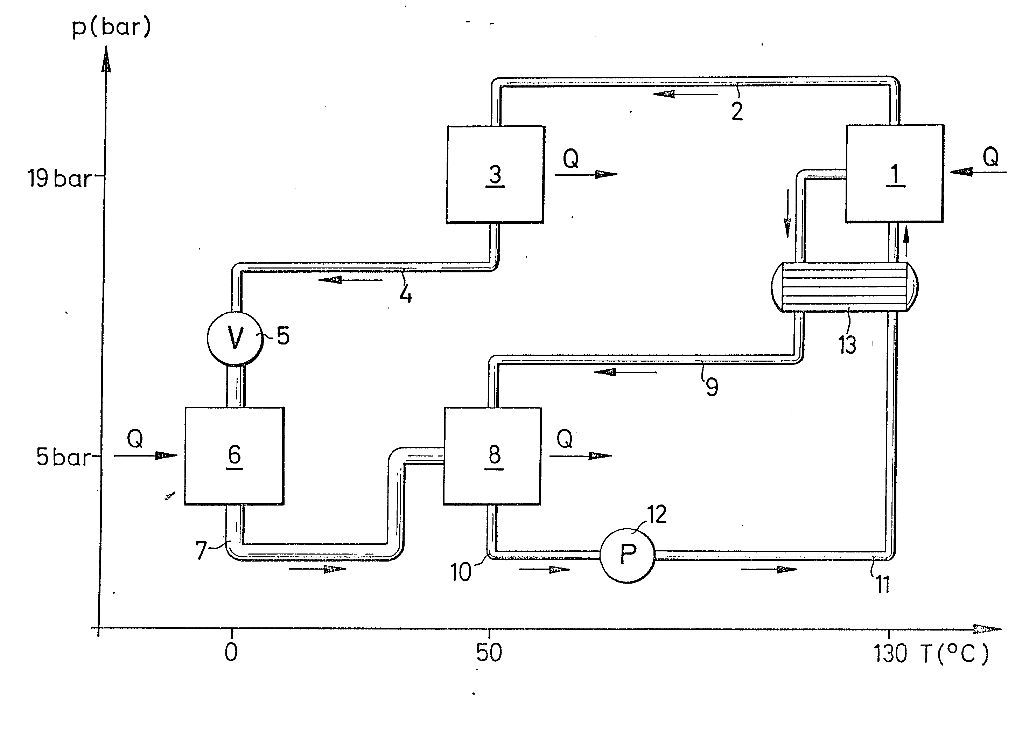

Die Anwendung der Erfindung in einer Sorptions-Wärmepumpe wird im folgenden unter Verwendung eines Arbeitsmediums aus FKW 22 und 1-Methyl-2-Pyrrolidon (MPY) näher beschrieben und anhand der Figur dargestellt. Dieses System zeigt unter den obigen Bedingungen eine Entgasungsbreite von 0,23 kg/kg Lösemittel; pro kg FKW sind also 4,3 kg Lösemittel umzupumpen. Die Sorptionsenthalpie beträgt -280 kJ/kg, die Viskosität bei 50°C 1,18 $mm^2/s$ und die spezifische Wärme bei 50°C 1,9 kJ/kg K.

Im Generator 1 wird die Lösung von FKW 22 in MPY erhitzt und dabei FKW 22 ausgetrieben. FKW 22 mit nur geringen Anteilen an MPY strömt gasförmig mit unverändertem Druck durch Leitung 2 in den Kondensator 3. Die in 1 angewandte Temperatu

führt zu einer so hohen Dampfspannung an FKW 22, daß bei der gewünschten Betriebstemperatur des Kondensators 3 der FKW 22 kondensieren kann. Die Kondensationswärme wird am Verflüssigungspunkt (ca. 50°C, abhängig vom Druck) frei und kann ebenfalls an das aufzuheizende Objekt abgegeben werden. Der flüssige FKW 22 wird über Leitung 4 und das Drosselventil 5 bei niedrigem Druck in dem Verdampfer 6 unter Aufnahme von Wärme aus der Umgebung bei niedriger Temperatur expandiert. Das dampfförmige FKW 22 erreicht über Leitung 7 den Absorber 8. Dort wird das FKW 22 unter Wärmeabgabe an das zu erhitzende Objekt in der über die Leitung 9 aus dem Generator 1 zugeführten an FKW 22 verarmten Lösung von MPY gelöst. Die an FKW 22 angereicherte Lösung von MPY verläßt den Absorber 8 und wird über Leitungen 10 und 11 durch Pumpe 12 in den Generator 1 zurückgepumpt. Auf ihrem Weg über den Wärmeaustauscher 13 gibt die verdünnte Lösung von Leitung 9 an die angereicherte Lösung in Leitung 10 Wärme ab. Wenn in dem System außerdem Wasserstoff oder ein anderes inertes Gas vorhanden ist, kann die mechanische Pumpe 12 durch eine Dampfblasenpumpe ersetzt werden.

Die Verdampfung des flüssigen FKW 22 hinter 5 in 6 hinein kann zu Temperaturen im Bereich von -20° C bis +40°C, vorzugsweise -10°C bis +20°C, insbesondere von -5°C bis +10°C führen. Beispielsweise kann die Wärme aus der Umgebung bei einer Temperatur von 0°C und einem Druck von 5 bar im Verdampfer aufgenommen werden. In diesem Fall enthält die verarmte Lösung noch ca. 0,65 kg FKW 22/kg Lösemittel. Der Dampf von FKW 22 wird bei gleichem Druck aber höherer Temperatur im Absorber 8 absorbiert. Die Absorption kann bei Temperaturen zwischen 20° und 80°C erfolgen, vorzugsweise zwischen 35°C und 65°C. Als Absorptionsmittel wird benutzt eine Lösung von MPY, die nur wenig FKW 22 enthält und vom Generator 1 kommt. Dabei steigt die Beladung auf 0,88 kg FKW 22/kg MPY an. Die aufgestärkte Lösung wird mit gleicher Temperatur zum

Generator 1 geschickt. Dort wird die reiche Lösung durch eine äußere Wärmequelle erhitzt. Dies kann bei Temperaturen zwischen 90°C und 180°C erfolgen, vorzugsweise zwischen 110°C und 150°C. Beispielsweise kann die Austreibung bei 130°C durchgeführt werden. Der Wärmefluß in das System und aus dem System wird in der Figur mit Q bezeichnet und durch durch die Pfeilrichtung angegeben. Die Lage der Mittelpunkte der Reaktoren 1 (Generator), 3 (Kondensator), 6 (Verdampfer) und 8 (Absorber) veranschaulicht gleichzeitig die in diesen Reaktoren herrschenden Druck/Temperatur-Bedingungen.

Ein weiteres Arbeitsmedium auf Basis MPY mit günstigem Lösungsbereich stellt das System MPY/$C_3HF_7$ dar. Bei 50°C/2,2 bar lösen sich 1,14 kg MPY pro kg Lösemittel (Absorber), bei 130°C/8,9 bar nur 0,48 kg MPY/kg Lösemittel (Austreiber), so daß eine Entgasungsbreite von 0,66 kg/kg Lösemittel erreicht wird. Es müssen also 1,52 kg Lösemittel pro kg FKW umgepumpt werden.

Es ist überraschend, daß die erfindungsgemäßen Arbeitsmedien, die aus speziellen Fluorkohlenwasserstoffen und Carbonsäureamiden zusammengesetzt sind, eine größere Entgasungsbreite als das System FKW 22/Tetraethylenglycol-Dimethylether aufweisen.

Je niedriger die Temperatur im Absorber ist, umso höher ist die erreichte Beladung des Säureamids mit Fluor- oder Fluorchlorkohlenwasserstoff. Je höher die Temperatur im Absorber ist, umso geringer ist die Restbeladung. Das Mischungsverhältnis Säureamid/Fluorverbindung hängt also von den Arbeitsbedingungen ab. In den meisten Fällen beträgt der Gewichtsanteil an Säureamid 10 - 75 %, vorzugsweise 20 - 40 %.

TABELLE 1

Nichtcyclische Amide der Formel I

| R | $R^1$ | $R^2$ |
|---|---|---|
| $C_3H_7$ | $C_2H_5$ | $C_2H_5$ |
| $C_5H_{11}$ | " | " |
| $C_7H_5$ | " | " |
| $C_8H_{17}$ | " | " |
| H | $C_3H_7$ | $C_3H_7$ |
| H | $C_4H_9$ | $C_4H_9$ |
| H | $C_5H_{11}$ | $C_5H_{11}$ |
| $CH_3$ | $C_3H_7$ | $C_3H_7$ |
| $C_4H_9$ | $C_5H_{11}$ | $C_5H_{11}$ |
| $CH_3$ | $COCH_3$ | - H |
| $C_2H_5$ | " | " |

TABELLE 2

cyclische Amide der Formel I

| $R^1$ | $R + R^2$ |
|---|---|
| $CH_3$ | $-(CH_2)_3-$ |
| $C_4H_9$ | " |
| $CH_3$ | $-(CH_2)_2\ CH\ CH_3-$ |
| $CH_3$ | $-(CH_2)_2\ CH\ CH_3\ CH_2-$ |
| $CH_3$ | $-(CH_2)_3\ CH\ C_2H_5-$ |
| $CH_3$ | -CH=CH-CH=CH- |
| $C_2H_5$ | " |
| $CH_3$ | $(CH_2)_5$ |

Patentansprüche:

1. Arbeitsmedium zur Verwendung in Sorptions-Wärmepumpen bestehend aus einem Wasserstoff enthaltenden Fluor- oder Fluorchlorkohlenwasserstoff und einem Lösungsmittel, dadurch gekennzeichnet, daß das Lösungsmittel aus mindestens einer flüssigen Verbindung der Formel

$$R\text{-}CO\text{-}N(R^1)\text{-}R^2$$

besteht, in der
$R^2$ für einen $C_1$- bis $C_4$- Alkylrest,
$R^1$ für $C_1$- bis $C_{10}$ -Alkyl- oder einen Acetylrest und
R für ein Wasserstoffatom oder einen $C_1$-$C_{10}$- Alkylrest steht,
oder in der
R und $R^2$ zusammen eine Alkylen- oder Alkenylengruppe mit zusammen 3 bis 5 Kohlenstoff-Brückengliedern, die noch durch Methylgruppen substituiert sein kann, bedeuten,
mit der Maßgabe, daß R, $R^1$ und $R^2$ zusammen zwischen 4 und 15 Kohlenstoffatomen enthalten.

2. Verwendung des Stoffpaares gemäß Anspruch 1 in einer Sorptions-Wärmepumpe.

p(bar)
19 bar
5 bar
2
3
Q
1
Q
4
V
5
13
9
Q
6
8
Q
12
P
7
10
11
0
50
130 T(°C)

Europäisches Patentamt

# EUROPÄISCHER RECHERCHENBERICHT

0083933

Nummer der Anmeldung

EP 83 10 0078

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| P,X | EP-A-0 062 516 (MATSUSHITA) * Ansprüche 1,2,5 * | 1,2 | C 09 K 5/04 |
| X | EP-A-0 030 127 (DAIKIN) * Ansprüche 1,4; Seite 5, Zeilen 20-25 * | 1,2 | |
| A | CHEMICAL ABSTRACTS, Band 95, 1981, Seite 149, Nr. 171820h, Columbus, Ohio, USA & JP - A - 81 10953 (MATSUSHITA ELECTRIC INDUSTRIAL CO., LTD.) 11.03.1981 * Zusammenfassung * | 1,2 | |

RECHERCHIERTE SACHGEBIETE (Int. Cl. 3)

C 09 K 5/00
F 25 B 29/00

Der vorliegende Recherchenbericht wurde für alle Patentansprüche erstellt

| Recherchenort | Abschlußdatum der Recherche | Prüfer |
|---|---|---|
| DEN HAAG | 20-04-1983 | NICOLAS H.J.F. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder nach dem Anmeldedatum veröffentlicht worden ist
D : in der Anmeldung angeführtes Dokument
L : aus andern Grunden angeführtes Dokument

& : Mitglied der gleichen Patentfamilie, übereinstimmendes Dokument